# EUROPEAN PATENT APPLICATION

(11) **EP 4 671 569 A1**
(43) Date of publication of application: **31.12.2025**
(21) Application number: 24184830.8
(22) Date of filing: 26.06.2024
(51) Int. Cl.: F16H 48/38, F16H 48/40, F16H 57/04

(54) **A DIFFERENTIAL SYSTEM**

(71) Applicant: Volvo Car Corporation, 405 31 Göteborg (SE)
(72) Inventor: SAARELA, Tommi, 40531 Göteborg (SE); LINDBLOM, Kristoffer, 40531 Göteborg (SE); RÅDBERG, Joel, 40531 Göteborg (SE); OHLSON, Anders, 40531 Göteborg (SE)
(74) Representative: Maiwald GmbH

(57) **Abstract**

The disclosure relates to a differential system (1) for a drivetrain of a vehicle and comprises a differential unit (10), a housing (20), and an intermediate element (30) provided between the differential unit and the housing. A first gear set (11) is configured to receive the driving torque from a prime mover and to transfer it to the housing. A second gear set (12) that is rotatably attached to the housing and is configured to distribute the driving torque between at least two gear units (131) of a third gear set (13). The housing is at least partially surrounding the second and third gear sets (12, 13). The intermediate element is provided at an interface between the housing, and one or both of the second and the third gear set, and comprises at least one metallic layer (31) and at least one elastic layer (32) provided on the metallic layer (31).

## Description

### TECHNICAL FIELD

The present disclosure relates to a differential system for a drivetrain of a vehicle, a vehicle comprising the differential system, and a use of an intermediate element.

### BACKGROUND ART

A differential system is fundamental for a vehicle's drivetrain for maintaining traction, stability and control during a drive, especially for navigating curves and cornering. Its primary function is to distribute power from a prime mover, such as a combustion engine or an electric motor, to at least one of at least two wheels, allowing them to rotate at different speeds. Differential systems achieve this through an arrangement of gear units that connect the prime mover, which provide a driving torque, to at least one of the wheels.

Available differential systems may cause disturbances, such as noise (whining, clunking, or grinding noises), vibration and harshness (NVH) issues, especially at certain steering wheel angles. These issues usually arise from interactions between stationary and moving parts of the differential systems, such as gear units and stationary parts that they interact with while moving. An exemplary problem may be caused by a phenomenon called stick-slip behavior of gear units, wherein the gear unit momentarily sticks to the stationary part it faces to (for instance due to static friction) during rotating (while the applied force exceeds the static friction). Known differential systems attempt to solve the NVH issues or at least to reduce their effects by, for instance, changing surface properties of the interacting components by additional treatment procedures, such as phosphate coating. Nevertheless, the available solutions complicate the production process, as well as fail to provide an effective solution.

### SUMMARY

The problem is at least partially solved or alleviated by the subject matter of the independent claims of the present disclosure, wherein further examples are incorporated in the dependent claims.

According to a first aspect, there is provided a differential system for a drivetrain of a vehicle. The differential system comprises a differential unit for transferring a driving torque from a prime mover of the vehicle to at least one wheel of the vehicle, a housing at least partially surrounding the differential unit, and an intermediate element provided between the differential unit and the housing. The differential unit comprises a first gear set configured to receive the driving torque from the prime mover and to transfer the driving torque to the housing. The differential unit further comprises a second gear set that is rotatably attached to the housing and is configured to distribute the driving torque received from the housing between at least two gear units of a third gear set of the differential unit. The housing is surrounding the second and third gear sets of the differential unit. Each one of the two gear units of the third gear set is configured to be connected to an axle shaft of the two wheels of the vehicle. The intermediate element is provided at an interface between the housing and one or both of the second gear set and the third gear set. The intermediate element comprises at least one metallic layer and at least one elastic layer provided on the metallic layer.

The drivetrain may comprise at least one of the prime mover, a transmission, a drive shaft, the differential, at least one axle shaft and wheels. The differential system is configured to transfer the driving torque from the prime mover (e.g., electric motor and/or combustion engine) to the wheels to allow the vehicle to make turns. The driving torque may be supplied by an electric motor (or, generally, motor) or a combustion engine (or, generally, engine). For receiving the driving torque from the motor, the differential unit comprises the first gear set. The "gear set" may define multiple gear elements in connection to one another or a single gear element. The "gear set" may also comprise other transfer members such as one or more belts or chains. The first gear set is configured to receive the driving torque from the prime mover and to transfer the driving torque to the housing. The first gear set may be provided outside the housing. The first gear set may be in direct contact with the drive shaft of the vehicle or the first gear set may receive the driving torque from the drive shaft through a transfer element, such as a belt or another gear element.

The differential unit further comprises the second gear set that is rotatably attached to the housing. In other words, the second gear set may comprise at least one gear element, which may rotate around its central axis, from which it may be attached to the housing. The second gear set may comprise two gear elements arranged opposite to each other and may be rotatable around their central axes, which may be concentric. The two gear elements may be spider or bevel gears, as used in a conventional differential. The second gear set may comprise an axis element (in other words a cross-shaft) connecting the two gear elements from their centers. The axis element may be arranged on the concentric central axes of the two gear elements. The second gear set is configured to distribute the driving torque received from the housing between the at least two gear units of the third gear set of the differential unit. The two gear units may be side or sun gears, as used in a conventional differential. The first gear set, and the second gear set may not have a direct connection, but rather, they may be connected to each other through the housing. The two gear units of the third gear set may be rotatably attached to the housing. In other words, the two gear units may rotate around their central axes, which may be concentric for the two gear units. The third gear set may be rotatably attached to the housing and the axle shaft. The two gear units may be arranged opposite to each other. The two gear elements of the second gear set may be provided between the two gear units of the third gear set, in that each meshes with the other one from two opposite sides thereof. Accordingly, rotation of one of the gear elements or the gear units may cause a rotation of the others.

The housing is at least partially surrounding the second gear set and the third gear of the differential unit. The housing may enclose the second gear set and the third gear set at least partially or completely. The first gear set may be attached to the housing, for instance by at least a bolt connection, causing a rotation of the housing (for instance around a longitudinal axis of the axle shaft) with a rotation of the first gear set. The second gear set and the third gear set of the differential unit may be provided inside the housing. The first gear set may be connected to the second gear set and the third gear set through the housing. In other words, the driving torque received from the prime mover (by the first gear set) may be transferred to the housing. The housing may be configured to be rotatable around a central axis thereof. The central axis may be the same as the longitudinal axis of the axle shaft. Thereby the transferred driving torque may cause the housing to rotate. The second gear set being rotatably attached to the housing may rotate with the housing in response to the rotation of the housing by the driving torque. The second gear set is configured to distribute the driving torque to the two gear units of the third gear set. For this, the second gear set may be meshed with the third gear set in a radial direction of the two gear units of the third gear set. Therewith, the housing may be configured to allow an indirect connection between the first gear set, and the second gear set and the third gear set.

Each one of the two gear units of the third gear set is configured to be connected to an axle shaft of the two wheels of the vehicle. The axle shaft may comprise at least two half-shafts. In this case, the two gear units may be configured to be connected to each of the at least two half-shafts of the axle shaft. The two gear units may be splined to the axle shaft. The axle shaft may be a front axle or rear axle of the vehicle. Rotation of the second gear set (in other words, of the two gear elements) in different rotational speed may cause different rotational speed at the respective wheel they are connected to through the axle shaft. This differential speed may provide a turning motion (in other words cornering) to the vehicle.

The rotation of the second gear set and the third gear set within the housing may cause friction therebetween, thereby wear on the gear sets and/or the housing. This may lead to potential failure as well as unwanted disturbances, such as NVH issues as mentioned above. Accordingly, the intermediate element may be provided within the housing at least partially between the differential unit and the housing (for instance, for reducing wear thereof). More specifically, the intermediate element is provided at the interface between the housing, and one or both of the second gear set and the third gear set. The intermediate element may be provided inside the housing, facing the housing from one side and, the second gear set or the third gear set (or their respective gear element or the gear unit) from an opposite side. The intermediate element may be, for example, a washer (also known as thrust washer or shim). The intermediate element may help to maintain a correct spacing between the second and/or the third gear set and the housing, thereby preventing excessive play, misalignment and improper connection of the gear sets with the housing.

The intermediate element comprises at least one metallic layer and at least one elastic layer provided on the metallic layer. The metallic layer of the intermediate element may comprise a metal, in particular be made of a metal. A metallic layer can withstand high stress and load experienced within the differential system, especially between the housing and the second or third gear set. It may provide strength to maintain integrity of the differential unit under varying operating conditions. The metallic layer may provide high resistance to wear and abrasion. Because the moving parts of the differential unit within the housing are subject to friction, the metallic layer may ensure long-term reliability and reduce a need for frequent replacement. Further, the metallic layer can endure high temperatures without deforming or losing its structural integrity during operation. Steel, particularly carbon steel or alloy steel may be a few variants for the metallic layer. The elastic layer of the intermediate element may be made of plastic. The plastic may be PEEK (polyether ether ketone) or PTFE (polytetrafluoroethylene), for example. The elastic layer may provide improved damping properties to the intermediate element, which may reduce vibrations causing the mentioned NVS issues. When considered alone, an elastic layer may not offer strength, heat resistance, and chemical resistance at levels of the metallic layer but the intermediate element comprising the elastic layer on the metallic layer may provide combined advantages of the two materials.

In an example, the first gear set may comprise at least a ring gear element, which is connected to the drive shaft from one side and to the housing from another side. Any number of gear elements and different configurations may be utilized to transfer the driving torque received by the first gear set to the housing or the second gear set of the differential unit.

According to an example, the metallic layer may be laminated to the elastic layer. The metallic layer may be bonded to the elastic layer by a lamination process, thereby creating a composite material. The lamination process may include at least one of adhesive application, heating, pressurizing, and curing, preferably in this order. The lamination process may improve strength, stability, and durability of the intermediate element. Laminated layers may build chemical bonds within each other, thereby providing a reliable intermediate element, for instance, compared to layers that are combined by a fixing element (such as a screw) or a tape.

According to an example, the intermediate element may be in a form matching a shape of the interface between the housing and, the second gear set or the third gear set. In other words, the intermediate element may be in a form matching a shape of the interface between the housing and, the gear elements of the second gear set or the gear units of the third gear set. For instance, if the interface is in a flat shape, the intermediate element may be in a flat form. Yet, if the interface has an angular shape, the intermediate element may be provided a matching angular shape, preferably with tolerances. For instance, the intermediate element may be in a disc form with a central hole. The central hole may allow the second and/or the third gear sets (or the gear elements and the gear units thereof) to extend therethrough to connect to the housing or the axle shaft, respectively. A curved disc form may be a preferable form (in case the shape of the interface is also curved). In other examples, the intermediate element may be in a form of a spring washer, dome washer, wave washer, or a fender washer.

According to an example, the metallic layer and the elastic layer may be opposite each other. The elastic layer may be facing the housing and the metallic layer may be facing the second gear unit and/or the third gear unit.

According to an example, the metallic layer and the elastic layer may be opposite each other and the metallic layer may be facing the housing and the elastic layer may be facing the second gear unit and/or the third gear unit.

Having a different arrangement of the elastic layer and the metallic layer with respect to the gear units and the housing may provide different advantages. In general, both embodiments may demonstrate advantages of the metallic layer and the advantages of the elastic layer at once.

According to an example, at least one of the metallic layer and the elastic layer may cover at least 50% surface area of the elastic layer or the metallic layer, respectively. For instance, the intermediate element may comprise a metallic layer (100% surface area) and an elastic layer, which is of 90% surface area of the metallic layer. In this configuration, for instance, ends of the metallic layer may be left uncovered by the elastic layer. In another alternative, the intermediate element may comprise an elastic layer (100% surface area) and a metallic layer, which is of 100% surface area of the elastic layer. In this case, the elastic layer and the metallic layer may be at the same size.

According to an example, the metallic layer may be arranged between at least two elastic layers. In other words, the metallic layer may be sandwiched between the two elastic layers. In this case, the size of the elastic layer and the metallic layer may be equal. Providing the metallic layer between the elastic layers may be advantageous during assembly of the differential system, removing importance of alignment of the intermediate element with respect to the housing and, the second or the third gear set. Of course, the metallic layer may be smaller (in both length and width directions) or shorter (in only length direction) than the elastic layers so that the elastic layers cover end portions of the metallic layer. The end portions may be opposite two ends of the intermediate element at a longitudinal direction thereof.

According to an example, the elastic layer may be arranged between at least two metallic layers. In other words, the elastic layer may be sandwiched between the two metallic layers. Also in this case, the size of the elastic layer and the metallic layer may be equal. Providing the elastic layer between the metallic layers may be advantageous during assembly of the differential system, removing importance of alignment of the intermediate element with respect to the housing and, the second or the third gear set. Of course, the elastic layer may be smaller (in both length and width directions) or shorter (in only length direction) than the metallic layers so that the metallic layers cover end portions of the elastic layer.

According to an example, the differential system may further comprise at least one lubricant channel for providing a lubricant to the interface between the housing and one or both of the second gear set and the third gear set. The lubricant channel may be provided on at least one of the housing, the second gear set and the third gear set. The lubricant channel may be connected to a lubricant reservoir from one end and open to the interface from another, opposite end.

According to an example, the intermediate element may comprise a textured element on at least one of the metallic layer and the elastic layer. The metallic layer and/or the elastic layer may be provided with the textured element before being combined to form the intermediate element. The textured element may be provided on one or both opposite sides of the metallic layer, the elastic layer, or in general the intermediate element. The textured element may be a repetitive surface shape, such as rectangles or circles. Of course, any other shape would be also possible. For instance, the textured element may comprise concentric rings around a center of the intermediate element. Alternatively, the textured element may comprise a spiral (or helical) pattern that winds outwards from the center. The textured element may comprise, alternatively or in addition to the repetitive surface shape, one or more cavities. The cavities may be for trapping the lubricant therein for providing the lubricant to the interface. The cavities may hold the lubricant therein and may be configured to feed the lubricant to the interface during operation (for instance continuously, in small amounts).

According to an example, the textured element may comprise patterned ridges and/or patterned grooves. The ridges and/or grooves may form the mentioned repetitive surface shape. The textured element with patterned ridges and/or grooves can vary in depth and pattern. The textured element may generally serve to increase friction between the intermediate element and surfaces it contacts, such as the housing and/or the second or the third gear set (or the gear unit and gear element thereof). Further, it may reduce slippage and rotation of the intermediate element around its central axis.

According to an example, the intermediate element may comprise a substantially smooth surface. Substantially smooth surface may mean an even surface without any deformations or with slight deformations only that do not cause any disturbances during operation. The smooth surface may allow the intermediate element to distribute an applied load evenly across its surface, thereby preventing a damage thereto. Further, the smooth surface may have excellent corrosion resistance and may be easier to produce. Last but not least, the smooth surface of the intermediate element may protect the surfaces it contacts during operation.

According to a second aspect, there is provided a vehicle comprising a differential system of the first aspect. The vehicle may for example be an electric vehicle, a hybrid vehicle or a vehicle with combustion engine. Further, the vehicle may be driven by the front axle, the rear axle or all-wheel (four-wheel drive).

In an example, the vehicle may further comprise a differential case unit for housing the differential system according to the first aspect. The differential case unit may enclose the first gear set, the housing and any connection therebetween. The differential case may have a size and/or a shape suitable for housing the differential system. The differential case may, in addition to the differential system, comprise at least one structural element, such as a bearing cage, to provide a support to the connections with the differential unit.

According to a third aspect, there is provided a use of an intermediate element between a differential unit and a housing of a differential system for reducing wear thereof, wherein the intermediate element comprises at least one metallic layer and at least one elastic layer provided on the metallic layer.

It should be noted that the above examples may be combined with each other irrespective of the aspect involved. Accordingly, the vehicle or use may be combined with structural features of the differential system.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a side cross-sectional view of a differential case unit comprising a differential system.
- Figure 2: shows a cross-sectional view of a housing at least partially surrounding the differential unit.
- Figure 3: shows a partial cross-sectional view of the housing from another perspective.
- Figure 4a, 4b: show cross-sectional views of exemplary intermediate elements.
- Figure 5a, 5b: show cross-sectional views of exemplary intermediate elements with patterned grooves and ridges, respectively.
- Figure 6a, 6b: show cross-sectional views of exemplary intermediate elements with a textured element.

### DETAILED DESCRIPTION

The Figures are merely schematic representations and serve only to illustrate examples of the disclosure. Identical or equivalent elements are in principle provided with the same reference signs.

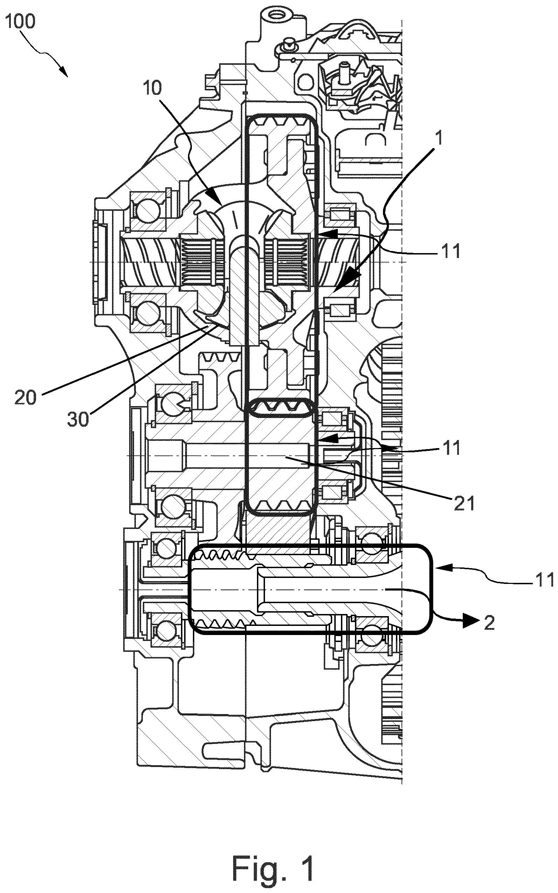

**Figure 1** shows a side cross-sectional view of a differential case unit 100 comprising a differential system 1. The differential system 1 is for a drivetrain of a vehicle (not shown). In Figure 1 the drivetrain is shown only partially. The drivetrain comprises a drive shaft 2 that indirectly connects the differential system 1 to a prime mover (not shown), which may be at least one of a combustion engine and an electric motor. The differential system 1 is configured to transfer the driving torque from the prime mover to at least one wheel (not shown) to allow the vehicle to make a turn. The differential system 1 comprises a differential unit 10 for transferring the driving torque from the prime mover of the vehicle to at least one wheel (for instance at least one of two wheels, e.g. front wheels and/or rear wheels) of the vehicle. The differential system 1 comprises a housing 20 at least partially surrounding the differential unit 10, and an intermediate element 30 provided between the differential unit 10 and the housing 20 for reducing wear thereof.

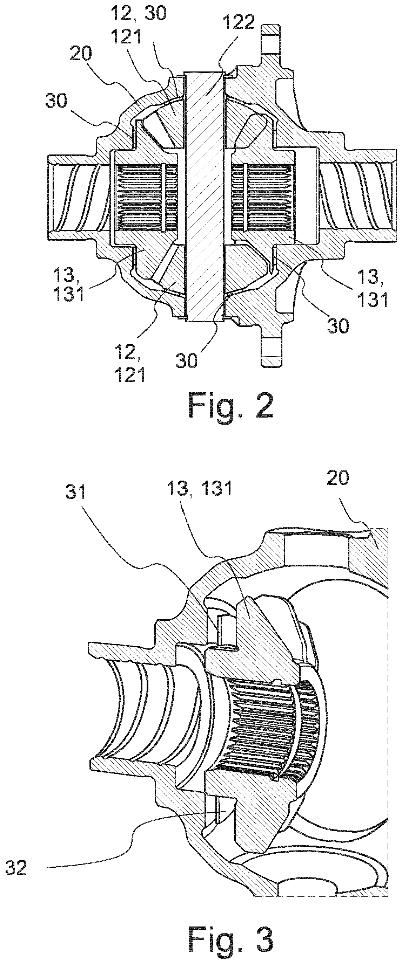

Best shown in Figure 1, the differential unit 10 comprises a first gear set 11 configured to receive the driving torque from the prime mover and to transfer the driving torque to the housing 20. The first gear set 11 is provided outside the housing. In Figure 1, the first gear set 11 comprises a gear element 11 provided on the drive shaft 2, a further gear element 11 on a parallel, countershaft 21 and yet a further gear element 11 in direct contact with the housing 20. The gear element 11 that is in direct contact with the housing 20 is depicted as a ring gear element, which is connected to the drive shaft 2 from one side and to the housing 20 from another side. The differential unit 10 further comprises a second gear set 12 and a third gear set 13, which are shown in more detail in Figures 2 and 3. The housing 20 is at least partially surrounding the second 12 and third gear sets 13.

**Figure 2** shows a cross-sectional view of a housing 20 at least partially surrounding the differential unit 10. The second gear set 12 is rotatably attached to the housing 20 and is configured to distribute the driving torque received from the housing 20 between at least two gear units 131 of the third gear set 13. The second gear set 12 is meshed with the third gear set 13 in a radial direction of the two gear units 131. Each one of the two gear units 131 of the third gear set 13 is configured to be connected to an axle shaft of two wheels of the vehicle (not shown). In Figure 2, the intermediate element 30 is provided at an interface between the housing 20 and both of the second gear set 12 and the third gear set 13.

The second gear set 12 comprises two gear elements 121 arranged opposite to each other and which are rotatable around their concentric central axes. The second gear set 12 comprises an axis element 122 connecting the two gear elements 121 from their centers. The axis element 122 is arranged on the concentric central axes of the two gear elements 121. The third gear set 13 comprises the two gear units 131. The two gear units 131 of the third gear set 13 are rotatably attached to the housing 20 and the axle shaft (not shown). The two gear units 131 are arranged opposite to each other. The two gear elements 121 of the second gear set 12 are provided between the two gear units 131 of the third gear set 13, in that each meshes with each other from two opposite sides thereof. Accordingly, rotation of one of the gear elements 121 or the gear units 131 may cause a rotation of the others.

**Figure 3** shows a partial cross-sectional view of the housing 20 from another perspective. The intermediate element 30 is provided inside the housing 20, facing the housing from one side and the third gear set 13 (in other words, the gear unit 131 of the third gear set 13) from an opposite side. The intermediate element 30 comprises at least one metallic layer 31 and at least one elastic layer 32 provided on the metallic layer 31. The intermediate element 30 is in a form matching a shape of the interface between the housing 20 and the third gear set. In Figure 3, the intermediate element 30 is, according to the shape of the interface, flat. As can be seen in Figure 2, the interface between the housing 20 and the second gear set 12 has an angular shape. Accordingly, the intermediate element 30 has an angular (curved disc) form. A central hole (not shown) allows the second gear set 12 and/or the third gear set 13 (or the gear elements 121 and the gear units 131 thereof, respectively) to connect to the housing 20.

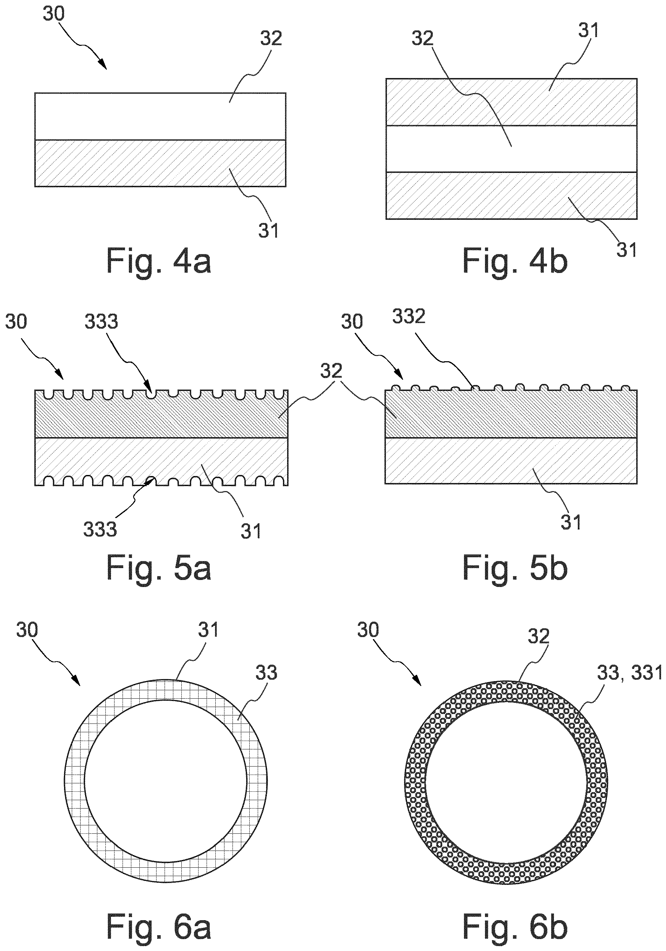

**Figure 4a** shows a cross-sectional view of an exemplary intermediate element 30. The intermediate element 30 comprises a metallic layer 31 and an elastic layer 32 provided on the metallic layer 31. The elastic layer 32 covers 100% of surface area of the metallic layer 31. Accordingly, in this example, the elastic layer 32 and the metallic layer 31 are at the same size.

**Figure 4b** shows a cross-sectional view of another exemplary intermediate element 30. The elastic layer 32 is arranged between two metallic layers 31. In other words, the elastic layer 32 is sandwiched between the two metallic layers 31. In this case, the size of the elastic layer 32 and the metallic layer 31 are equal.

**Figure 5a** shows a cross-sectional view of an exemplary intermediate element 30 with patterned grooves 333. The intermediate element 30 comprises the patterned grooves 333 as a textured element 33. In Figure 5a, the patterned grooves 333 are provided on both the metallic layer 31 and the elastic layer 32.

**Figure 5b** shows a cross-sectional view of an exemplary intermediate element 30 with patterned ridges 332. The intermediate element 30 comprises the patterned ridges 332 as a textured element 33. In Figure 5b, patterned ridges 332 are provided on only the elastic layer 32. In this embodiment, the metallic layer 31 has a smooth surface (without any substantial surface texture).

**Figure 6a** shows a cross-sectional view of an exemplary intermediate element 30 with a textured element 33. In this embodiment, the intermediate element 30 is in a disc form with a central hole. The textured element 33 of the intermediate element 30 comprises squares or rectangles. The textured element 33 is exemplarily provided on the metallic layer 31.

**Figure 6b** shows a cross-sectional view of another exemplary intermediate element 30 with a textured element 33. The intermediate element 30 is again in a disc form with a central hole. The textured element 33 comprises cavities 331. The cavities 331 may hold the lubricant therein and may be configured to feed the lubricant to the interface during operation. The textured element 33 is exemplarily provided on the elastic layer 32.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

| | |
|---|---|
| Differential system | 1 |
| Drive shaft | 2 |
| Differential unit | 10 |
| Differential case unit | 100 |
| First gear set | 11 |
| Second gear set | 12 |
| Gear element | 121 |
| Axis element | 122 |
| Third gear set | 13 |
| Gear unit | 131 |
| Housing | 20 |
| Countershaft | 21 |
| Intermediate element | 30 |
| Metallic layer | 31 |
| Elastic layer | 32 |
| Textured element | 33 |
| Cavity | 331 |
| Patterned ridge | 332 |
| Patterned groove | 333 |

## Claims

1. A differential system (1) for a drivetrain of a vehicle, comprising:
- a differential unit (10) for transferring a driving torque from a prime mover of the vehicle to at least one wheel of the vehicle,
- a housing (20) at least partially surrounding the differential unit (10), and
- an intermediate element (30) provided between the differential unit (10) and the housing (20),
wherein the differential unit (10) comprises a first gear set (11) configured to receive the driving torque from the prime mover and to transfer the driving torque to the housing (20),
wherein the differential unit (10) further comprises a second gear set (12) that is rotatably attached to the housing (20) and is configured to distribute the driving torque received from the housing (20) between at least two gear units (131) of a third gear set (13) of the differential unit (10),
wherein the housing (20) is at least partially surrounding the second (12) and third gear sets (13) of the differential unit (10),
wherein the second gear set (12) is meshed with the third gear set (13) in a radial direction of the two gear units (131),
wherein each one of the two gear units (131) of the third gear set (13) is configured to be connected to an axle shaft of two wheels of the vehicle,
wherein the intermediate element (30) is provided at an interface between the housing (20) and one or both of the second gear set (12) and the third gear set (13), and wherein the intermediate element (30) comprises at least one metallic layer (31) and at least one elastic layer (32) provided on the metallic layer (31).

2. The differential system (1) according to claim 1, wherein the metallic layer (31) is laminated to the elastic layer (32).

3. The differential system (1) according to any one of the previous claims, wherein the intermediate element (30) is in a form matching a shape of the interface between the housing (20) and, the second gear set (12) or the third gear set (13).

4. The differential system (1) according to any one of the previous claims, wherein the metallic layer (31) and the elastic layer (32) are opposite each other, and the elastic layer (32) is facing the housing (20) and the metallic layer (31) is facing the second gear unit (12) and/or the third gear unit (13).

5. The differential system (1) according to any one of the claims 1-3, wherein the metallic layer (31) and the elastic layer (32) are opposite each other, and the metallic layer (31) is facing the housing (20) and the elastic layer (32) is facing the second gear (12) unit and/or the third gear unit (13).

6. The differential system (1) according to any one of the previous claims, wherein at least one of the metallic layer (31) and the elastic layer (32) covers at least 50% surface area of the elastic layer (32) or the metallic layer (31), respectively.

7. The differential system (1) according to any one of the previous claims, wherein the metallic layer (31) is arranged between at least two elastic layers (32).

8. The differential system (1) according to any one of the previous claims, wherein the elastic layer (32) is arranged between at least two metallic layers (31).

9. The differential system (1) according to any one of the previous claims, wherein the differential system (1) further comprising at least one lubricant channel for providing a lubricant to the interface between the housing (20) and one or both of the second gear set (12) and the third gear set.

10. The differential system (1) according to any one of the previous claims, wherein the intermediate element (30) comprises a textured element (33) on at least one of the metallic layer (31) and the elastic layer (32).

11. The differential system (1) according to claims 9 and 10, wherein the textured element (33) comprises one or more cavities (331) for trapping the lubricant therein for providing the lubricant to the interface.

12. The differential system (1) according to claims 10 or 11, wherein the textured element (33) comprises patterned ridges (332) and/or grooves (333).

13. The differential system (1) according to any one of the previous claims 1 to 9, wherein the intermediate element (30) comprises a substantially smooth surface.

14. A vehicle comprising a differential system (1) according to any one of the previous claims.

15. A use of an intermediate element (30) between a differential unit (10) and a housing (20) of a differential system (1) for reducing wear thereof, wherein the intermediate element (30) comprises at least one metallic layer (31) and at least one elastic layer (32) provided on the metallic layer (31).
